# EUROPEAN PATENT APPLICATION

(11) **EP 4 527 986 A2**
(43) Date of publication of application: **26.03.2025**
(21) Application number: 24190291.5
(22) Date of filing: 23.07.2024
(51) Int. Cl.: C25B 1/23, C25B 15/02, C25B 15/029, C25B 15/08

(54) **CATHODE GAS SUPPLY SYSTEM AND CARBON RECYCLING SYSTEM**

(30) Priority: 19.09.2023 JP 2023151674
(71) Applicant: Kabushiki Kaisha Toshiba, Tokyo 105-0023 (JP); Toshiba Energy Systems & Solutions Corporation, Saiwai-ku Kawasaki-shi Kanagawa (JP)
(72) Inventor: NAGANO, Keita, Kawasaki-shi, Kanagawa (JP); OTA, Hiroyuki, Minato-ku, Tokyo (JP); KOI, Takeshi, Kawasaki-shi, Kanagawa (JP); ODAIRA, Hiromichi, Kawasaki-shi, Kanagawa (JP); MURAMATSU, Takehiko, Kawasaki-shi, Kanagawa (JP); NISHIYAMA, Hiroki, Kawasaki-shi, Kanagawa (JP); MIYAI, Shumpei, Kawasaki-shi, Kanagawa (JP)
(74) Representative: Hoffmann Eitle

(57) **Abstract**

A cathode gas supply system according to an embodiment includes: a carbon dioxide electrolysis unit that electrolyzes the carbon dioxide gas, and discharges cathode gas containing the carbon monoxide gas and carbon dioxide gas; and a downstream carbon dioxide capture unit that captures the carbon dioxide gas contained in the cathode gas, and supplies the cathode gas to a processing unit.

## Description

### FIELD

Embodiments described herein relate generally to a cathode gas supply system and a carbon recycling system.

### BACKGROUND

In recent years, carbon dioxide capture and utilization storage (CCUS) technology has become known as an effective technology for addressing the global warming issue that has becomes a global concern. The CCUS technology is a technology that captures to utilize or store carbon dioxide gas (CO₂) contained in exhaust gas or the like.

A carbon dioxide electrolysis unit, which electrolyzes the carbon dioxide gas into the carbon monoxide gas (CO), is known as one of technologies for utilizing the captured carbon dioxide gas. The electrolytically produced carbon monoxide gas is discharged as cathode gas from the carbon dioxide electrolysis unit. The discharged cathode gas is supplied to a downstream processing unit. The processing unit reacts the carbon monoxide gas with hydrogen gas or the like to thereby produce a synthetic fuel or a chemical product composed mainly of hydrocarbons.

The cathode gas in the carbon dioxide electrolysis unit contains as its main components carbon monoxide gas and hydrogen gas. A gas composition of the cathode gas can be regulated by regulating a concentration of a gas component in gas supplied to the carbon dioxide electrolysis unit, or by changing electrolysis conditions. Thus, cathode gas adapted to a gas composition required for the processing unit is supplied to the processing unit.

However, the cathode gas in the carbon dioxide electrolysis unit may contain unreacted carbon dioxide gas. In some types of processing units, cathode gas containing the carbon dioxide gas may decrease processing efficiency. A desired process may possibly become difficult.

A concentration of the carbon dioxide gas, which is contained in the gas supplied to the carbon dioxide electrolysis unit, is sometimes increased, in order to regulate a gas composition of cathode gas or to maintain performance of the carbon dioxide electrolysis unit. This also increases a concentration of the carbon dioxide gas contained in the cathode gas, which may decrease processing efficiency of the processing unit.

### BRIEF DESCRIPTION OF THE DRAWINGS

Fig. 1 is a view showing an overall structure of a carbon recycling system including a cathode gas supply system according to an embodiment.
Fig. 2 is a view showing a carbon dioxide capture unit shown in Fig. 1.
Fig. 3 is a schematic cross-sectional view showing an electrolysis cell of a carbon dioxide electrolysis unit shown in Fig. 1.
Fig. 4 is a view showing a modification example of the carbon dioxide capture unit shown in Fig. 1.
Fig. 5 is a view showing another modification example of the carbon dioxide capture unit shown in Fig. 1.
Fig. 6 is a view showing a modification example of the cathode gas supply system shown in Fig. 1.
Fig. 7 is a view showing another modification example of the cathode gas supply system shown in Fig. 1.
Fig. 8 is a view showing another modification example of the cathode gas supply system shown in Fig. 1.
Fig. 9 is a view showing another modification example of the cathode gas supply system shown in Fig. 1.

### DETAILED DESCRIPTION

A cathode gas supply system according to an embodiment is a system for supplying a processing unit with cathode gas containing the carbon monoxide gas obtained by electrolyzing carbon dioxide gas. The cathode gas supply system includes: a carbon dioxide electrolysis unit that electrolyzes the carbon dioxide gas, and discharges cathode gas containing the carbon monoxide gas and the carbon dioxide gas; and a downstream carbon dioxide capture unit that captures the carbon dioxide gas contained in the cathode gas, and supplies the cathode gas to the processing unit.

A carbon recycling system according to an embodiment includes: the aforementioned cathode gas supply system; and a processing unit that processes the carbon monoxide gas contained in the cathode gas supplied from the cathode gas supply system.

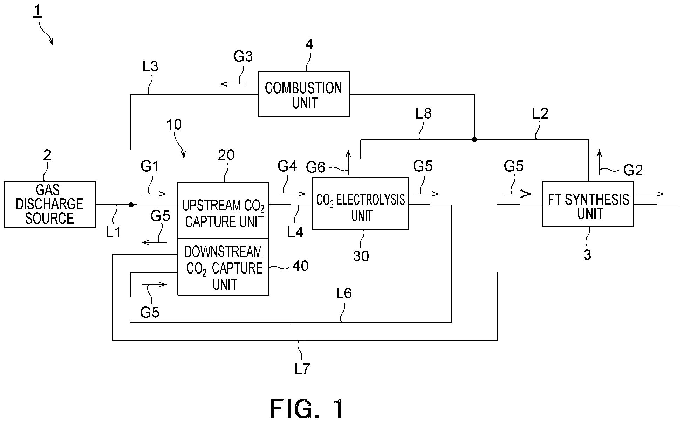

A cathode gas supply system and a carbon recycling system according to embodiments are described using Figs. 1 to 9.

A carbon recycling system 1 according to the embodiment is described first. As shown in Fig. 1, the carbon recycling system 1 may include a gas discharge source 2, a cathode gas supply system 10, an FT synthesis unit 3, and a combustion unit 4.

The gas discharge source 2 may be a unit or a plant that produces carbon dioxide gas and discharges it. The gas discharge source 2 discharges exhaust gas G1 containing the carbon dioxide gas. Examples of the gas discharge source 2 may be a thermal power plant, a steelmaking plant, a waste incineration plant, etc.

The cathode gas supply system 10 electrolyzes the carbon dioxide gas contained in the exhaust gas G1 discharged from the gas discharge source 2, and supplies the FT synthesis unit 3 with electrolytically obtained cathode gas G5 (described later) containing the carbon monoxide gas. The cathode gas supply system 10 is supplied with the exhaust gas G1 from the gas discharge source 2 through a first exhaust gas line L1. The cathode gas supply system 10 according to the embodiment is configured to also electrolyze exhaust gas G3 which is supplied thereto from the combustion unit 4 described later through a second exhaust gas line L3. Details of the cathode gas supply system 10 are described later.

The FT synthesis unit 3 is a unit that processes the carbon monoxide gas contained in the cathode gas G5 (described later) supplied from the cathode gas supply system 10. The FT synthesis unit 3 is an example of a processing unit, and may produce a synthetic fuel from the carbon monoxide gas, for example. The FT synthesis unit 3 may perform a catalytic reduction reaction of the carbon monoxide gas. The FT synthesis unit 3 is supplied with the cathode gas G5 from the cathode gas supply system 10.

For example, the FT synthesis unit 3 may be a unit that uses the carbon monoxide gas contained in the cathode gas G5 to produce a synthetic fuel containing hydrocarbon as its main component. The FT synthesis unit 3 may use the Fischer-Tropsch method (FT synthesis). In this case, a liquid fuel such as aviation fuel (SAF) or the like may be synthesized by a reduction reaction between carbon monoxide gas and hydrogen gas at a high temperature and a high pressure in the presence of a catalyst. The hydrogen gas may be supplied from a not-shown hydrogen gas supply facility. Fuels such as LPG, naphtha, diesel fuel or the like may be synthesized instead of the aviation fuel. This synthetic fuel may be used in automobiles or ships.

The FT synthesis unit 3 discharges the synthetic fuel produced by it and also discharges tail gas G2 containing hydrocarbon gas. The tail gas G2 may contain methane gas as hydrocarbon gas. The tail gas G2 may further contain carbon dioxide gas, carbon monoxide gas, and hydrogen gas. The tail gas G2 is supplied to the combustion unit 4 through a tail gas line L2. The tail gas G2 is sometimes referred to as off gas.

The processing unit is not limited to the FT synthesis unit 3, and may be any unit as long as it can process the carbon monoxide gas contained in the cathode gas G5.

The combustion unit 4 is a unit that produces carbon dioxide gas from anode gas G6 (described later) discharged from a carbon dioxide electrolysis unit 30 described later, and the aforementioned tail gas G2 discharged from the FT synthesis unit 3. The combustion unit 4 is an example of a carbon dioxide production unit, and may produce carbon dioxide gas by combusting the anode gas G6 and the tail gas G2. More specifically, the methane gas contained the tail gas G2, serving as a fuel, combusts to produce carbon dioxide gas from the methane gas, as shown in Equation (1) below.

CH₄ + 2O₂ → CO₂ + 2H₂O (1)

The carbon dioxide gas produced in the combustion unit 4 is supplied to the carbon dioxide electrolysis unit 30 described later. The carbon dioxide gas may be captured by an upstream carbon dioxide capture unit 20 described later, and may be supplied from the upstream carbon dioxide capture unit 20 to the carbon dioxide electrolysis unit 30.

More specifically, the combustion unit 4 discharges the exhaust gas G3 containing the carbon dioxide gas produced by it. The exhaust gas G3 is supplied to the cathode gas supply system 10 through the second exhaust gas line L3. The second exhaust gas line L3 may join the aforementioned first exhaust gas line L1.

The carbon dioxide production unit is not limited to the combustion unit 4, and may be any unit as long as it can produce carbon dioxide gas from hydrocarbon gas, such as methane gas, contained in the tail gas G2. For example, the carbon dioxide gas production unit may be a reforming unit capable of producing carbon dioxide gas from hydrocarbon gas. The reforming unit may produce carbon dioxide gas by a steam reforming reaction. Alternatively, the carbon recycling system 1 according to the embodiment may not include a carbon dioxide gas production unit.

The following is a description of the cathode gas supply system 10 according to the embodiment. As shown in Fig. 1, the cathode gas supply system 10 includes an upstream carbon dioxide capture unit 20, a carbon dioxide electrolysis unit 30, and a downstream carbon dioxide capture unit 40.

The upstream carbon dioxide capture unit 20 is a unit that captures the carbon dioxide gas from the exhaust gas G1 and the exhaust gas G3 each containing the carbon dioxide gas. The captured carbon dioxide gas is supplied to the carbon dioxide electrolysis unit 30. Herebelow, the embodiment is described, referring to the upstream carbon dioxide capture unit 20 simply as upstream capture unit 20. The upstream capture unit 20 is located upstream of the carbon dioxide electrolysis unit 30. The upstream capture unit 20 is supplied with the exhaust gas G1 from the gas discharge source 2 through the first exhaust gas line L1. The upstream capture unit 20 is supplied with the exhaust gas G3 from the combustion unit 4 through the second exhaust gas line L3.

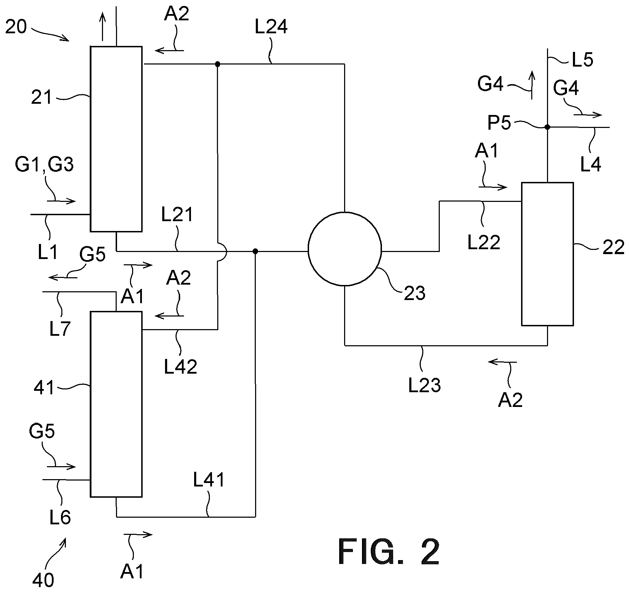

As shown in Fig. 2, the upstream capture unit 20 may include an upstream absorption tower 21, a regeneration power 22, and a heat exchanger 23.

The upstream absorption tower 21 causes an absorption liquid such as amine solution to absorb the carbon dioxide gas contained in the exhaust gas G1 and the exhaust gas G3. The absorption liquid absorbs the carbon dioxide gas through gas-liquid contact with the exhaust gas G1 and the exhaust gas G3. The absorption liquid having absorbed the carbon dioxide gas becomes a rich liquid A1, and is supplied to the heat exchanger 23 through a first rich liquid line L21. In the heat exchanger 23, the rich liquid A1 exchanges heat with a lean liquid A2 described later, and is supplied to the regeneration tower 22 through a second rich liquid line L22. The exhaust gas G1 and the exhaust gas G3 having been in contact with the lean liquid A2 in the upstream absorption tower 21 may be discharged from the upstream absorption tower 21.

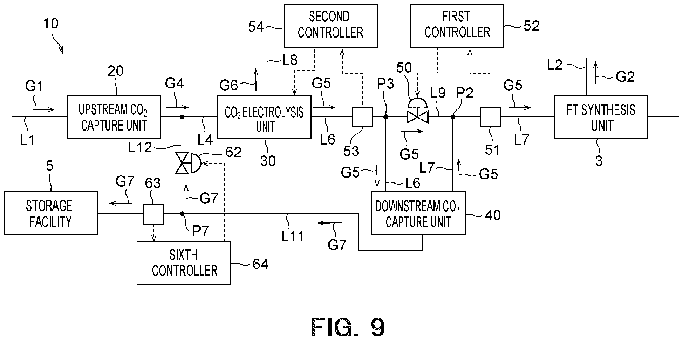

The regeneration tower 22 releases the carbon dioxide gas from the rich liquid A1 having absorbed the carbon dioxide gas in the upstream absorption tower 21. The rich liquid A1 supplied to the regeneration tower 22 is heated by means of water vapor to release the carbon dioxide gas. Supply gas G4 containing the carbon dioxide gas having been released in the regeneration tower 22 is discharged from the regeneration tower 22, and is supplied to the carbon dioxide electrolysis unit 30 through a supply gas line L4. The supply gas G4 also contains water vapor. A discharge line L5, which discharges the supply gas G4 to a storage facility 5 (see Fig. 9) described later or the like, branches from the supply gas line L4.

In the regeneration tower 22, the absorption liquid having released the carbon dioxide gas is regenerated to become a lean liquid A2. The lean liquid A2 is supplied to the heat exchanger 23 through a first lean liquid line L23. In the heat exchanger 23, the lean liquid A2 exchanges heat with the aforementioned rich liquid A1, and is supplied to the upstream absorption tower 21 through a second lean liquid line L24. The second lean liquid line L24 is provided with a cooler, not shown, so that the lean liquid A2 is cooled by the cooler. The lean liquid A2 supplied to the upstream absorption tower 21 again absorbs the carbon dioxide gas.

In this manner, the absorption liquid circulates between the upstream absorption tower 21 and the regeneration tower 22, repeatedly absorbing and releasing the carbon dioxide gas, so that the carbon dioxide gas contained in the exhaust gas G1 and the exhaust gas G3 is captured.

As shown in Fig. 1, the carbon dioxide electrolysis unit 30 is a unit that electrolyzes the carbon dioxide gas contained in the supply gas G4, and discharges cathode gas G5 containing the carbon monoxide gas. The cathode gas G5 contains unreacted carbon dioxide gas. Herebelow, the embodiment is described, referring to the carbon dioxide electrolysis unit 30 simply as electrolysis unit 30. The electrolysis unit 30 according to the embodiment is supplied with the supply gas G4 from the aforementioned upstream capture unit 20.

The electrolysis unit 30 may be configured to react directly the carbon dioxide gas, and may not require the carbon dioxide gas to be dissolved in an aqueous solution. An example of the electrolysis unit 30 is described in detail.

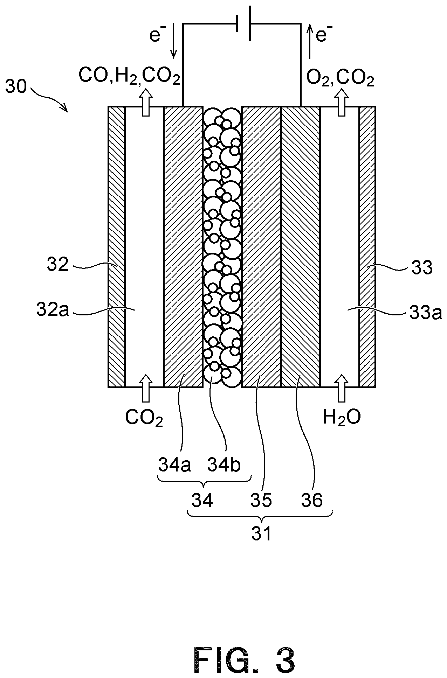

As shown in Fig. 3, the electrolysis unit 30 includes an electrolysis cell 31, a cathode separator 32, and an anode separator 33. The cathode separator 32 includes a flow channel 32a for the supply gas G4 containing the carbon dioxide gas. The anode separator 33 includes a flow channel 33a for electrolyte. The electrolysis unit 30 has a stacking structure in which the electrolysis cells 31, the cathode separators 32, and the anode separators 33 are stacked. The electrolysis cell 31 includes a cathode electrode 34 including a gas diffusion layer 34a and a catalyst layer 34b, a solid polymer membrane 35, and an anode electrode 36.

The aforementioned supply gas line L4 is connected to the flow channel 32a of the cathode separator 32, and the carbon dioxide gas is supplied to the cathode electrode 34. The anode electrode 36 is supplied with the electrolyte. The electrolyte is not particularly limited and may be.

When current is applied between the cathode electrode 34 and the anode electrode 36, a reduction reaction of the carbon dioxide gas occurs at the cathode electrode 34, as show in Equation (2) below.

2CO₂ + H₂O + 2e⁻ → CO + 2OH⁻ (2)

As shown in Equation (3) below, an oxidation reaction of hydroxide ions occurs at the anode electrode 36 to produce oxygen gas and water.

2OH⁻ → 1/2O₂ +H₂O + 2e⁻ (3)

In order to directly react the carbon dioxide gas contained in the supply gas G4 at the cathode electrode 34, a three-phase interface may be formed in the catalyst layer 34b, at which carbon dioxide gas (gas), water (liquid), and catalyst (solid) collect in a balanced manner. However, if they are out of balance, an amount of hydrogen gas produced as a side reaction may increase, as shown in Equation (4) below. For example, when an amount of the carbon dioxide gas supplied to the catalyst layer 34b of the cathode electrode 34 decreases, an amount of the hydrogen gas produced at the cathode electrode 34 may increase. Increase in amount of the produced hydrogen gas may decrease conversion efficiency from the carbon dioxide gas into the carbon monoxide gas.

2H₂O + 2e⁻ → H₂ + 2OH⁻ (4)

The electrolysis unit 30 discharges from the cathode electrode 34 the cathode gas G5 containing the carbon monoxide gas and the hydrogen gas. The cathode gas G5 also contains unreacted carbon dioxide gas. A first cathode line L6 is connected to the flow channel 32a of the cathode separator 32, so that the cathode gas G5 is supplied to the downstream carbon dioxide capture unit 40 through the first cathode line L6.

The electrolysis unit 30 discharges from the anode electrode 36 the anode gas G6 containing the unreacted carbon dioxide gas and the oxygen gas. An anode line L8 is connected to the flow channel 33a of the anode separator 33, so that the anode gas G6 is supplied to the combustion unit 4 through the anode line L8. The anode line L8 may join the aforementioned tail gas line L2. Alternatively, the tail gas line L2 may join the anode line L8.

The downstream carbon dioxide capture unit 40 captures the carbon dioxide gas contained in the cathode gas G5 discharged from the electrolysis unit 30, and supplies the cathode gas G5 to the aforementioned FT synthesis unit 3. Herebelow, the embodiment is described, referring to the downstream carbon dioxide capture unit 40 simply as downstream capture unit 40. The downstream capture unit 40 is located downstream of the electrolysis unit 30.

As shown in Fig. 2, the downstream capture unit 40 is supplied with the cathode gas G5 discharged from the electrolysis unit 30 through the aforementioned first cathode line L6. The downstream capture unit 40 may include a downstream absorption tower 41.

The downstream absorption tower 41 causes an absorption liquid to absorb the carbon dioxide gas contained in the cathode gas G5 discharged from the electrolysis unit 30. The absorption liquid absorbs the carbon dioxide gas through gas-liquid contact with the cathode gas G5. The absorption liquid having absorbed the carbon dioxide gas becomes a rich liquid A1. The rich liquid A1 having absorbed the carbon dioxide gas in the downstream absorption tower 41 may be supplied to the regeneration tower 22 of the upstream capture unit 20. The cathode gas G5 having been in contact with the lean liquid A2 in the downstream absorption tower 41 is discharged from the downstream absorption tower 41 and is supplied to the FT synthesis unit 3. In this manner, the downstream absorption tower 41 is configured to capture the carbon dioxide gas from the cathode gas G5.

More specifically, the rich liquid A1 discharged from the downstream absorption tower 41 may be supplied to the heat exchanger 23 of the upstream capture unit 20 through a third rich liquid line L41. For example, the third rich liquid line L41 may join the first rich liquid line L21 of the upstream capture unit 20. In this case, the rich liquid A1 discharged from the upstream absorption tower 21 and the rich liquid A1 discharged from the downstream absorption tower 41 may be mixed with each other and supplied to the heat exchanger 23.

The lean liquid A2 supplied to the downstream absorption tower 41 may be supplied from the second lean liquid line L24 of the upstream capture unit 20. More specifically, a third lean liquid line L42 may branch from the second lean liquid line L24, and the third lean liquid line L42 may connect to the downstream absorption tower 41. In this case, some of the lean liquid A2 discharged from the heat exchanger 23 is supplied to the downstream absorption tower 41. The cooler for cooling the lean liquid A2 may be arranged either on the third lean liquid line L42, or on the second lean liquid line L24 at a position between the heat exchanger 23 and a branch point P1 with the third lean liquid line L42.

In this manner, some of the absorption liquid circulates between the downstream absorption tower 41 and the generation tower 22, repeatedly absorbing and releasing the carbon dioxide gas, so that the carbon dioxide gas contained in the cathode gas G5 is captured. The captured carbon dioxide gas is supplied from the downstream capture unit 40 to the FT synthesis unit 3 through the second cathode line L7.

The downstream capture unit 40 according to the embodiment is configured to capture the carbon dioxide gas from the cathode gas G5 by means of the regeneration tower 22 and the heat exchanger 23 of the upstream capture unit 20. The downstream capture unit 40 is partially integrated with the upstream capture unit 20.

The following is a description of a method of recycling carbon using the carbon recycling system 1 including the cathode gas supply system 10 according to the embodiment as structured above.

As shown in Figs. 1 and 2, the exhaust gas G1 discharged from the gas discharge source 2 is supplied to the upstream absorption tower 21 of the upstream capture unit 20 through the first exhaust gas line L1. The exhaust gas G3 discharged from the combustion unit 4 is also supplied to the upstream absorption tower 21. In the upstream absorption tower 21, the lean liquid A2 absorbs the carbon dioxide gas contained in the exhaust gas G1 and the exhaust gas G3 to become the rich liquid A1. The rich liquid A1 is then supplied to the regeneration tower 22. In the regeneration tower 22, the carbon dioxide gas is released from the rich liquid A1 to become the supply gas G4. The supply gas G4 is then discharged from the regeneration tower 22.

The supply gas G4 discharged from the regeneration tower 22 is supplied to the cathode electrode 34 (see Fig. 3) of the electrolysis unit 30 through the supply gas line L4. The anode electrode 36 is supplied with the electrolyte.

In the electrolysis unit 30, current is applied between the cathode electrode 34 and the anode electrode 36 to electrolyze the carbon dioxide gas. As shown in the aforementioned Equation (2), the carbon dioxide gas is reduced at the cathode electrode 34 to produce carbon monoxide gas. The produced carbon monoxide gas is discharged, as the cathode gas G5, together with the hydrogen gas and the unreacted carbon dioxide gas from the cathode electrode 34. As shown in the aforementioned Equation (3), hydroxide ions are oxidized at the anode electrode 36 to produce oxygen gas. The produced oxygen gas is discharged, as the anode gas G6, together with the unreacted carbon dioxide gas from the anode electrode 36.

The cathode gas G5 discharged from the electrolysis unit 30 is supplied to the downstream absorption tower 41 of the downstream capture unit 40 through the first cathode line L6. In the downstream absorption tower 41, the lean liquid A2 absorbs carbon dioxide gas contained in the cathode gas G5 to become the rich liquid A1. The rich liquid A1 is then supplied to the regeneration tower 22 of the upstream capture unit 20. The cathode gas G5 having been in contact with the lean liquid A2 in the downstream absorption tower 41 is discharged. A concentration of the carbon dioxide gas contained in the discharged cathode gas G5 decreases.

The cathode gas G5 discharged from the downstream capture unit 40 is supplied to the FT synthesis unit 3 through the second cathode line L7. As shown in the aforementioned Equation (1), a catalytic reduction reaction of the carbon monoxide gas contained in the cathode gas G5 is performed in the FT synthesis unit 3 at high temperature and high pressure to produce a synthetic fuel containing hydrocarbon as its main component. As described above, the decrease in concentration of the carbon dioxide gas contained in the cathode gas G5 can improve production efficiency of the synthetic fuel. The produced synthetic fuel is discharged from the FT synthesis unit 3. In this manner, carbon can be recycled. The tail gas G2 containing methane gas is discharged from the FT synthesis unit 3 separately from the synthetic fuel.

The tail gas G2 discharged from the FT synthesis unit 3 is supplied to the combustion unit 4 through the tail gas line L2. The aforementioned anode gas G6 discharged from the electrolysis unit 30 is supplied to the combustion unit 4 through the anode line L8. In the combustion unit 4, the methane gas contained in the tail gas G2, serving as a fuel, combusts. Thus, carbon dioxide gas is produced from the methane gas, so that the exhaust gas G3 having an increased carbon dioxide concentration is produced. The produced exhaust gas G3 is discharged from the combustion unit 4.

The exhaust gas G3 discharged from the combustion unit 4 is supplied to the upstream capture unit 20 through the second discharge gas line L3.

In this manner, the carbon can be recycled while making good use of it.

According to the embodiment, the carbon dioxide gas contained in the cathode gas G5 discharged from the electrolysis unit 30 is captured in the downstream capture unit 40. The cathode gas G5 discharged from the downstream capture unit 40 is supplied to the FT synthesis unit 3. This can decrease a concentration of the carbon dioxide gas contained in the cathode gas G5, which is electrolytically produced and is supplied to the FT synthesis unit 3. This can prevent decrease in production efficiency of the synthetic fuel in the FT synthesis unit 3.

According to the embodiment, as described above, a concentration of the carbon dioxide gas contained in the cahooted gas G5 can be decreased. This can increase a concentration of the carbon dioxide gas supplied to the electrolysis unit 30. Namely, there is a possibility that a concentration of the carbon dioxide gas contained in the supply gas G4 supplied to the electrolysis unit 30 is increased, in order to regulate a gas composition of the cathode gas G5 or to maintain performance of the electrolysis unit 30. In this case, a concentration of the carbon dioxide gas contained in the cathode gas G5 discharged from the electrolysis unit 30 may also increase. However, according to the embodiment, the carbon dioxide gas can be captured from the cathode gas G5 by the downstream capture unit 40. Thus, even when a concentration of the carbon dioxide gas contained in the supply gas G4 is increased, a concentration of the carbon dioxide gas supplied to the FT synthesis unit 3 can be decreased. This can decrease a concentration of the carbon dioxide gas contained in the cathode gas G5 supplied to the FT synthesis unit 3, while maintaining the performance of the electrolysis unit 30.

According to the embodiment, the supply gas G4 supplied to the electrolysis unit 30 is gas containing the carbon dioxide gas captured from the exhaust gas G1 and the exhaust gas G3 in the upstream capture unit 20. This can increase a concentration of the carbon dioxide gas contained in the supply gas G4, to thereby increase an amount of the carbon monoxide gas produced in the electrolysis unit 30. This can decrease generation of hydroxide ions, which is likely to occur due to a water electrolysis reaction when a carbon dioxide gas concentration in the cathode electrode 34 is low.

According to the embodiment, the downstream capture unit 40 includes the downstream absorption tower 41 that causes the lean liquid A2 to absorb the carbon dioxide gas contained in the cathode gas G5, and the rich liquid A1 having absorbed the carbon dioxide gas is supplied to the regeneration tower 22 of the upstream capture unit 20. Namely, the downstream capture unit 40 and the upstream capture unit 20 can share the regeneration tower 22. This can increase installation space efficiency of the unit. In addition, energy for heating the rich liquid A1 in the regeneration tower 22 can be efficiently used.

According to the embodiment, the carbon dioxide gas is produced from the anode gas G6 discharged from the electrolysis unit 30 and the tail gas G2 discharged from the FT synthesis unit 3, and the exhaust gas G3 containing the thus produced carbon dioxide gas is supplied to the upstream capture unit 20. Thus, the carbon contained in the tail gas G2 can be efficiently used.

### (First Modification Example)

In the aforementioned embodiment, the example in which the upstream capture unit 20 captures the carbon dioxide gas from the exhaust gas G1 and the exhaust gas G3 each containing the carbon dioxide gas, and supplies the carbon dioxide gas to the electrolysis unit 30 has been described. However, the embodiment is not limited thereto. The electrolysis unit 30 may be supplied with the carbon dioxide gas by any manner. For example, when a concentration of carbon dioxide gas contained in exhaust gas discharged from the gas discharge source 2 is high, the exhaust gas may be supplied to the electrolysis unit 30 without being passed through the upstream capture unit 20. Alternatively, for example, gas containing carbon dioxide gas, which is transported from an area distant from the carbon recycling system 1 according to the embodiment, may be supplied to the electrolysis unit 30. In this case, the carbon dioxide gas may be supplied to the electrolysis unit 30 without being passed through the upstream capture unit 20.

### (Second Modification Example)

In the aforementioned embodiment, the example in which the third rich liquid line L41 of the downstream capture unit 40 joins the first rich liquid line L21 of the upstream capture unit 20 has been described. However, the embodiment is not limited thereto.

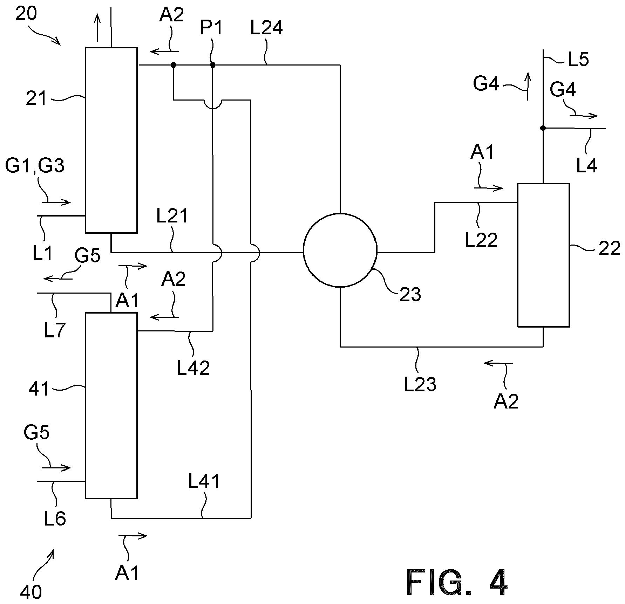

For example, as shown in Fig. 4, the third rich liquid L41 may join the second lean liquid line L24 of the upstream capture unit 20. In this case, the rich liquid A1 discharged from the downstream absorption tower 41 can be supplied to the upstream absorption tower 21. The third rich liquid line L41 may join the second lean liquid line L24 at a position downstream of the branch point P1 with the third lean liquid line L42. When a concentration of the carbon dioxide gas contained in the cathode gas G5 supplied to the downstream absorption tower 41 is low, a concentration of the carbon dioxide of the rich liquid A1 discharged from the downstream absorption tower 41 is low. In this case, the rich liquid A1 discharged from the downstream absorption tower 41 may be supplied as the lean liquid A2 to the upstream absorption tower 21. This can increase a carbon dioxide concentration of the rich liquid A1 supplied to the regeneration tower 22, to thereby improve capture efficiency of the carbon dioxide gas.

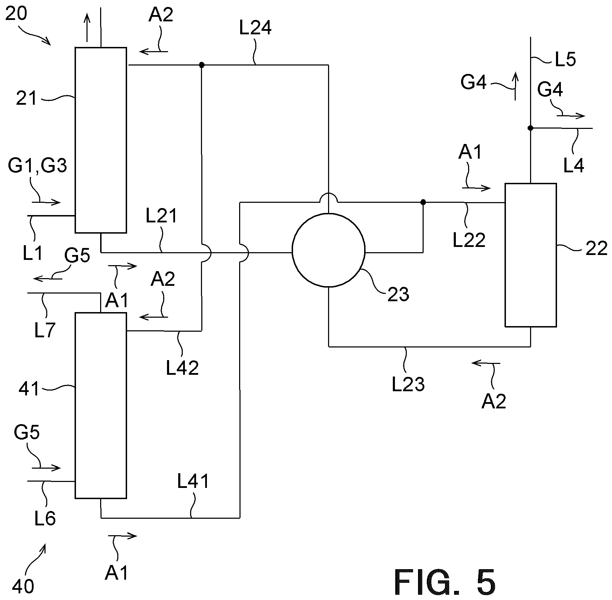

Alternatively, as shown in Fig. 5, the third rich liquid line L41 may join the second rich liquid line L22. In this case, the rich liquid A1 discharged from the downstream absorption tower 41 can be supplied to the regeneration tower 22. When a concentration of the carbon dioxide gas contained in the cathode gas G5 supplied to the downstream absorption tower 41 is high, a concentration of the carbon dioxide of the rich liquid A1 discharged from the downstream absorption tower 41 is high. In this case, the rich liquid A1 discharged from the downstream absorption tower 41 may be supplied to the regeneration tower 22 without being supplied to the upstream absorption tower 21 and the heat exchanger 23.

Another modification example may be combined with the respective cathode gas supply systems 10 shown in Figs. 4 and 5.

### (Third Modification Example)

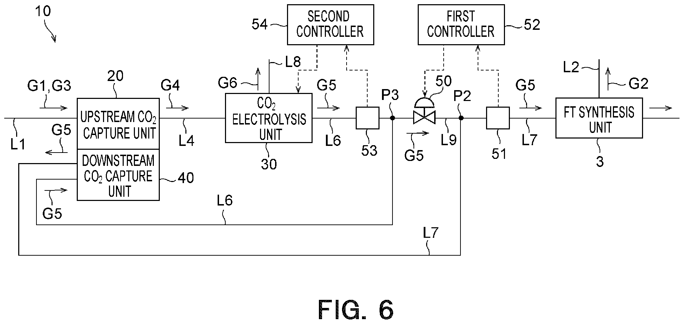

In the aforementioned embodiment, the example in which the cathode gas G5 discharged from the electrolysis unit 30 is supplied to the FT synthesis unit 3 through the downstream capture unit 40 has been described. However, the embodiment is not limited thereto. For example, as shown in Fig. 6, the cathode gas supply system 10 may further include a bypass line L9 and a bypass flowrate regulation valve 50.

The bypass line L9 supplies some of the cathode gas G5 discharged from the electrolysis unit 30 to the FT synthesis unit 3, bypassing the downstream capture unit 40. The bypass line L9 may branch from the first cathode line L6 and join the second cathode line L7.

The bypass flowrate regulation valve 50 is arranged on the bypass line L9. The bypass flowrate regulation valve 50 regulates a flowrate of the cathode gas G5 in the bypass line L9. More specifically, the bypass flowrate regulation valve 50 is configured such that its opening degree can be regulated so as to regulate a flowrate of the cathode gas G5 passing through the bypass flowrate regulation valve 50. When a processing unit such as the FT synthesis unit 3 can allow the cathode gas G5 supplied thereto to contain some carbon dioxide gas, at least some of the cathode gas G5 may be supplied to the FT synthesis unit 3 without being passed through the downstream capture unit 40. This can decrease energy for capturing the carbon dioxide gas from the cathode gas G5. The bypass flowrate regulation valve 50 may be controlled by a first controller 52 described later, or may be manually operated without being controlled by the first controller 52.

As shown in Fig. 6, the cathode gas supply system 10 may further include a downstream carbon dioxide concentration meter 51.

The downstream carbon dioxide concentration meter 51 measures a concentration of the carbon dioxide gas contained in the cathode gas G5 in the second cathode line L7 at a position downstream of a joint point P2 with the bypass line L9. Herebelow, the modification example is described, referring to the downstream carbon dioxide concentration meter 51 simply as downstream concentration meter 51.

The downstream concentration meter 51 is arranged on the second cathode line L7 at a position between the joint point P2 with the bypass line L9 and the FT synthesis unit 3. The downstream concentration meter 51 is arranged downstream of the downstream capture unit 40.

An opening degree of the bypass flowrate regulation valve 50 may be regulated based on a measured value of a concentration of the carbon dioxide gas, which is measured by the downstream concentration meter 51. In this case, a concentration of the carbon dioxide gas contained in the cathode gas G5 supplied to the FT synthesis unit 3 may be regulated to a desired concentration. For example, as an opening degree of the bypass flowrate regulation value 50 is increased, a concentration of the carbon dioxide gas contained in the cathode gas G5 supplied to the FT synthesis unit 3 can be increased. On the other hand, as an opening degree of the bypass flowrate regulation value 50 is decreased, a concentration of the carbon dioxide gas contained in the cathode gas G5 supplied to the FT synthesis unit 3 can be decreased.

As shown in Fig. 6 the cathode gas supply 10 may further include the first controller 52. The first controller 52 may be integrated in the same control unit (not shown) as another controller, or may be integrated in a control unit different from another controller.

The first controller 52 may control the bypass flowrate regulation valve 50 based on a concentration of the carbon dioxide gas measured by the downstream concentration meter 51. For example, the first controller 52 may regulate an opening degree of the bypass flowrate regulation valve 50 in such a manner that a concentration of the carbon dioxide gas contained in the cathode gas G5 supplied to the FT synthesis unit 3 becomes a desired concentration. Since the first controller 52 controls the bypass flowrate regulation valve 50, an opening degree of the bypass flowrate regulation valve 50 can be appropriately and automatically regulated.

### (Fourth Modification Example)

As shown in Fig. 6, the cathode gas supply system 10 according to the embodiment may further include an upstream carbon dioxide concentration meter 53.

The upstream carbon dioxide concentration meter 53 measures a concentration of the carbon dioxide gas contained in the cathode gas G5 discharged from the electrolysis unit 30. Herebelow, the modification example is described, referring to the upstream carbon dioxide concentration meter 53 simply as upstream concentration meter 53.

The upstream concentration meter 53 measures a concentration of the carbon dioxide gas contained in the cathode gas G5 in the first cathode line L6 at a position upstream of a branch point P3 with the bypass line L9. The upstream concentration meter 53 is arranged on the first cathode line L6 at a position between the electrolysis unit 30 and the branch point P3 with the bypass line L9. The upstream concentration meter 53 is arranged at a position upstream of the downstream capture unit 40.

Supply current supplied to the electrolysis unit 30 for electrolysis may be regulated based on a concentration of the carbon dioxide gas measured by the upstream concentration meter 53. In this case, a concentration of the carbon dioxide gas contained in the cathode gas G5 discharged from the electrolysis unit 30 may be regulated to a desired concentration. For example, as the supply current is increased, the reaction by the aforementioned Equation (2) can be promoted, so that a concentration of the carbon dioxide gas contained in the cathode gas G5 can be decreased. On the other hand, as the supply current is decreased, the reaction by the aforementioned Equation (2) can be suppressed, so that a concentration of the carbon dioxide gas contained in the cathode gas G5 can be increased.

As shown in Fig. 6, the cathode gas supply system 10 may further include a second controller 54. The second controller 54 may be integrated in the same control unit (not shown) as another controller, or may be integrated in a control unit different from another controller.

The second controller 54 may control the supply current supplied to the electrolysis unit 30 for electrolysis, based on a concentration of the carbon dioxide gas measured by the upstream concentration meter 53. For example, the second controller 54 may regulate the supply current in such a manner that a concentration of the carbon dioxide gas contained in the cathode gas G5 discharged from the electrolysis unit 30 becomes a desired concentration. Since the second controller 54 controls the supply current, the supply current can be appropriately and automatically regulated based on a concentration of the carbon dioxide gas discharged from the electrolysis unit 30.

### (Fifth Modification Example)

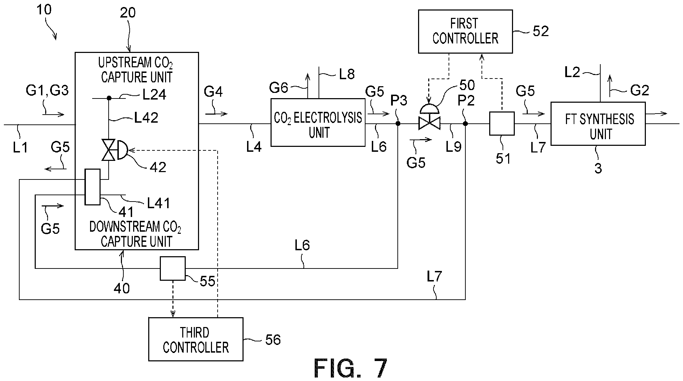

In the aforementioned embodiment, as shown in Fig. 7, the cathode gas supply system 10 may further include a cathode gas analyzer 55, and the downstream capture unit 40 may include an absorption liquid flowrate regulation valve 42.

As shown in Fig. 7, the absorption liquid flowrate regulation valve 42 is arranged on the third lean liquid line L42. The absorption liquid flowrate regulation valve 42 regulates a flowrate of the lean liquid A2 supplied to the downstream absorption tower 41 of the downstream capture unit 40. More specifically, the absorption liquid flowrate regulation valve 42 is configured such that its opening degree can be regulated so as to regulate a flowrate of an absorption liquid passing through the absorption liquid flowrate regulation valve 42. The absorption liquid flowrate regulation valve 42 may be controlled by a third controller 56 described later, or may be manually operated without being controlled by the third controller 56.

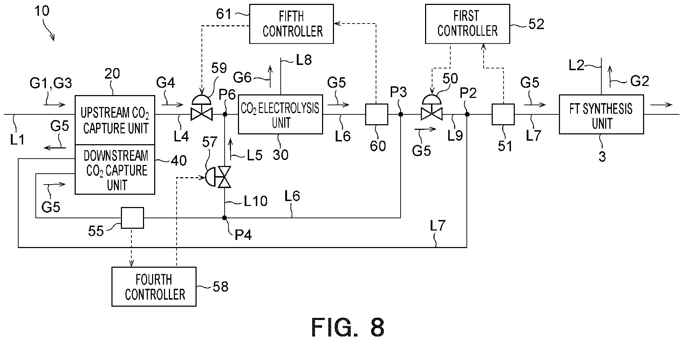

The cathode gas analyzer 55 analyzes the cathode gas G5 supplied to the downstream capture unit 40. More specifically the cathode gas analyzer 55 measures at least one of a concentration of the carbon dioxide gas contained in the cathode gas G5 and a flowrate of the cathode gas G5. The cathode gas analyzer 55 analyzes the cathode gas G5 in the first cathode line L6 at a position downstream of the branch point P3 with the bypass line L9. The cathode gas analyzer 55 may be arranged on the first cathode line L6 at a position between the branch point P3 with the bypass line L9 and the downstream capture unit 40. Alternatively, when the cathode gas supply system 10 includes a cathode gas return line L10 (see Fig. 8) described later, the cathode gas analyzer 55 may analyze the cathode gas G5 in the first cathode line L6 at a position downstream of a branch point P4 with the cathode gas return line L10. The cathode gas analyzer 55 may be arranged on the first cathode line L6 at a position between the branch point P4 with the cathode gas return lien L10 and the downstream capture unit 40.

An opening of the aforementioned absorption liquid flowrate regulation valve 42 may be regulated based on a measurement result of the cathode gas analyzer 55. This can effectively regulate a flowrate of the lean liquid A2 supplied to the downstream absorption tower 41.

For example, when the cathode gas analyzer 55 analyzes a concentration of the carbon dioxide gas contained in the cathode gas G5, an opening degree of the absorption liquid flowrate regulation valve 42 may be decreased as a concentration of the carbon dioxide gas decreases. This can decrease a flowrate of the lean liquid A2 supplied to the downstream absorption tower 41, to thereby prevent the lean liquid A2 from being excessively supplied to the downstream absorption tower 41. Thus, decrease in flowrate of the lean liquid A2 supplied to the upstream absorption tower 21 can be prevented, to thereby prevent decrease in capture efficiency of the carbon dioxide gas in the upstream absorption tower 21. On the other hand, an opening degree of the absorption liquid flowrate regulation valve 42 may be increased as a concentration of the carbon dioxide gas increases. This can increase a flowrate of the lean liquid A2 supplied to the downstream absorption tower 41, to thereby improve capture efficiency of the carbon dioxide gas in the downstream absorption tower 41.

Alternatively, for example, when the cathode gas analyzer 55 measures a flowrate of the cathode gas G5, an opening degree of the absorption flowrate regulation valve 42 may be decreased as a flowrate of the cathode gas G5 decreases. This can decrease a flowrate of the lean liquid A2 supplied to the downstream absorption tower 41, to thereby prevent decrease in capture efficiency of the carbon dioxide gas in the upstream absorption tower 21. On the other hand, an opening degree of the absorption liquid flowrate regulation valve 42 may be increased as a flowrate of the cathode gas G5 increases. This can increase a flowrate of the lean liquid A2 supplied to the downstream absorption tower 41, to thereby improve capture efficiency of the carbon dioxide gas in the downstream absorption tower 41.

As shown in Fig. 7, the cathode gas supply system 10 may further include the third controller 56. The third controller 56 may be integrated in the same control unit (not shown) as another controller, or may be integrated in a control unit different from another controller.

The third controller 56 may control the absorption liquid flowrate regulation valve 42 based on a measurement result of the cathode gas analyzer 55. For example, the third controller 56 may control an opening degree of the absorption liquid flowrate regulation valve 42 in such a manner that a flowrate of the lean liquid A2 supplied to the downstream absorption tower 41 corresponds to an amount of the carbon dioxide gas supplied to the downstream capture unit 40. Since the third controller 56 controls the absorption liquid flowrate regulation valve 42, an opening degree of the lean liquid A2 supplied to the downstream absorption tower 41 can be appropriately and automatically regulated.

The aforementioned fourth modification example may be combined with the fifth modification example of the cathode gas supply system 10 shown in Fig. 7.

### (Sixth Modification Example)

In the aforementioned embodiment, as shown in Fig. 8, the cathode gas supply system 10 may further include a cathode gas return line L10 and a cathode gas flowrate regulation valve 57.

The cathode gas return line L10 supplies some of the cathode gas G5 discharged from the electrolysis unit 30 to the electrolysis unit 30. The cathode gas return line L10 may branch from the first cathode line L6 and join the aforementioned supply gas line L4. The cathode gas return line L10 may branch from the first cathode line L6 at a poison downstream of the branch point P3 with the bypass line L9. The cathode gas return line L10 may join the supply gas line L4 at a poison downstream of a branch point P5 (see Fig. 2) with the discharge line L5. Since the cathode gas G5 is supplied to the electrolysis unit 30, a concentration of the carbon dioxide gas supplied to the electrolysis unit 30 can be decreased. This can suppress, at the cathode electrode 34, salt deposition which is likely to occur when a concentration of the carbon dioxide gas is high.

The cathode gas flowrate regulation valve 57 is arranged on the cathode gas return line L10. The cathode gas flowrate regulation valve 57 regulates a flowrate of the cathode gas G5 in the cathode gas return line L10. More specifically, the cathode gas flowrate regulation valve 57 is configured such that its opening degree can be regulated so as to regulate a flowrate of the cathode gas G5 passing through the cathode gas flowrate regulation valve 57. The cathode gas flowrate regulation valve 57 may be controlled by a fourth controller 57 described later, or may be manually operated without being controlled by the fourth controller 57.

As shown in Fig. 8, the cathode gas supply system 10 may further include the aforementioned cathode gas analyzer 55. The cathode gas analyzer 55 may have the same structure as the cathode gas analyzer 55 shown in Fig. 7.

The cathode gas analyzer 55 analyzes the cathode gas G5 in the first cathode line L6 at a position downstream of the branch point P4 with the cathode gas return line L10. The cathode gas analyzer 55 is arranged on the first cathode line L6 at a position between the branch point P4 with the cathode gas return line L10 and the downstream capture unit 40.

An opening degree of the aforementioned cathode gas flowrate regulation valve 57 may be regulated based on a measurement result of the cathode gas analyzer 55. This can prevent decrease in capture efficiency of the carbon dioxide gas in the downstream capture unit 40.

For example, when the cathode gas analyzer 55 analyzes a concentration of the carbon dioxide gas contained in the cathode gas G5, an opening degree of the cathode gas flowrate regulation valve 57 may be increased as a concentration of the carbon dioxide gas increases. This can increase a flowrate of the cathode gas G5 in the cathode gas return line L10. This can prevent an amount of the carbon dioxide gas supplied to the downstream absorption tower 41 from becoming excessive, to thereby prevent decrease in capture efficiency of the carbon dioxide gas in the downstream capture unit 40. On the other hand, an opening degree of the cathode gas flowrate regulation valve 57 may be decreased as a concentration of the carbon dioxide gas decreases. This can decrease a flowrate of the cathode gas G5 in the cathode gas return line L10. This can increase an amount of the carbon dioxide gas supplied to the downstream absorption tower 41, to thereby prevent decrease in capture efficiency of the carbon dioxide gas in the downstream capture unit 40.

Alternatively, when the cathode gas analyzer 55 measures a flowrate of the cathode gas G5, an opening degree of the cathode gas flowrate regulation valve 57 may be increased as a flowrate of the cathode gas G5 increases. This can increase a flowrate of the cathode gas G5 in the cathode gas return line L10, to thereby prevent decrease in capture efficiency of the carbon dioxide gas in the downstream capture unit 40. On the other hand, an opening degree of the cathode gas flowrate regulation valve 57 may be decreased as a flowrate of the cathode gas G5 decreases. This can decrease a flowrate of the cathode gas G5 in the cathode gas return line L10, to thereby prevent decrease in capture efficiency of the carbon dioxide gas in the downstream capture unit 40.

As shown in Fig. 8, the cathode gas supply system 10 may further include a fourth controller 58. The fourth controller 58 may be integrated in the same control unit (not shown) as another controller, or may be integrated in a control unit different from another controller.

The fourth controller 58 may control the cathode gas flowrate regulation valve 57 based on a flowrate of the cathode gas G5 measured by the cathode gas analyzer 55. For example, the fourth controller 58 may regulate an opening degree of the cathode gas flowrate regulation valve 57 in order to be capable of preventing decrease in capture efficiency of the carbon dioxide gas in the downstream capture unit 40. Since the forth controller 58 controls the cathode gas flowrate regulation valve 57, an opening degree of the cathode gas flowrate regulation valve 57 can be appropriately and automatically regulated.

### (Seventh Modification Example)

As shown in Fig. 8, the cathode gas supply system 10 according to the embodiment may further include a supply gas flowrate regulation valve 59 and a cathode gas analyzer 60.

The supply gas flowrate regulation valve 59 is arranged on the supply gas line L4. The supply gas flowrate regulation valve 59 relates a flowrate of the supply gas G4 supplied to the electrolysis unit 30.

More specifically, the supply gas flowrate regulation valve 59 is configured such that its opening degree can be regulated so as to regulate a flowrate of the supply gas G4 passing through the supply gas flowrate regulation valve 59. The supply gas flowrate regulation valve 59 regulates a flow rate of the supply gas G4 in the supply gas line L4 at a position upstream of a joint point P6 with the cathode gas return line L10 and downstream of the branch point P5 (see Fig. 2) with the discharge line L5. The supply gas flowrate regulation valve 59 is arranged on the supply gas line L4 at a position between the branch point P5 with the discharge line L5 and the joint point P6 with the cathode gas return line L10. The supply gas flowrate regulation valve 59 may be controlled by a fifth controller 61 described later, or may be manually operated without being controlled by the fifth controller 61.

The cathode gas analyzer 60 may have the same structure as the cathode gas analyzer 55 shown in Fig. 7.

The cathode gas analyzer 60 analyzes the cathode gas G5 in the first cathode line L6 at a position upstream of the branch point P3 with the bypass line L9. The cathode gas analyzer 60 is arranged on the first cathode line L6 at a position between the electrolysis unit 30 and the branch point P3 with the bypass line L9.

An opening degree of the aforementioned supply gas flowrate regulation valve 59 may be regulated based on a measurement result of the cathode gas analyzer 60. This can effectively regulate a flowrate of the supply gas G4 supplied to the electrolysis unit 30.

For example, when the cathode gas analyzer 60 measures a concentration of the carbon dioxide gas contained in the cathode gas G5, an opening degree of the supply gas flowrate regulation valve 59 may be decreased as a concentration of the carbon dioxide gas increases. This can decrease a flowrate of the supply gas G4 supplied to the electrolysis unit 30, to thereby decrease a concentration of the carbon dioxide gas contained in the cathode gas G5 discharged from the electrolysis unit 30. On the other hand, an opening degree of the supply gas flowrate regulation valve 59 may be increased as a concentration of the carbon dioxide gas decreases. This can increase a flowrate of the supply gas G4 supplied to the electrolysis unit 30, to thereby increase an amount of carbon monoxide gas produced in the electrolysis unit 30.

As shown in Fig. 8, the cathode gas supply system 10 may further include the fifth controller 61. The fifth controller 61 may be integrated in the same control unit (not shown) as another controller, or may be integrated in a control unit different from another controller.

The fifth controller 61 may control the supply gas flowrate regulation valve 59 based on a measurement result of the cathode gas analyzer 60. For example, an opening degree of the supply gas flowrate regulation valve 59 may be regulated in such a manner that a production amount of carbon monoxide gas is prevented from being decreased and that a concentration of the carbon dioxide gas contained in the cathode gas G5 is prevented from increasing. Since the fifth controller 61 controls the supply gas flowrate regulation valve 59, an opening degree of the supply gas flowrate regulation valve 59 can be appropriately and automatically regulated.

### (Eighth Modification Example)

In the aforementioned embodiment, the example in which the downstream capture unit 40 and the upstream capture unit 20 share the regeneration tower 22 has been described. However, the embodiment is not limited thereto. For example, as shown in Fig. 9, the downstream capture unit 40 may be configured to be independent from the upstream capture unit 20. In this case, the downstream capture unit 40 may independently include the aforementioned downstream absorption tower 41, the regeneration tower that releases the carbon dioxide gas from the rich liquid A1 discharged from the downstream absorption tower 41, and the heat exchanger, although they are not shown. Herebelow, the modification example is described, referring to gas containing the carbon dioxide gas, which is discharged from the regeneration tower of the downstream capture unit 40, as capture gas G7.

As shown in Fig. 9, the cathode gas supply system 10 according to the embodiment may further include a facility line L11, a capture gas return line L12, and a capture gas flowrate regulation valve 62.

The facility line L11 supplies the storage facility 5 with the capture gas G7 containing the carbon dioxide gas captured from the cathode gas G5 in the downstream capture unit 40. The storage facility 5 is a facility that stores the capture gas G7. Gas with an increased carbon dioxide gas concentration from the capture gas G7 may be stored in the storage facility 5. The aforementioned discharge line L5 may be connected to the storage facility 5 so that the supply gas G4 may be supplied to thereto through the discharge line L5 (see Fig. 2). In this case, the supply gas G4 may also be stored in the storage facility 5.

The capture gas return line L12 branches from the facility line L11, and supplies the capture gas G7 to the electrolysis unit 30. The capture gas return line L12 supplies at least some of the capture gas G7 discharged from the downstream capture unit 40 to the electrolysis unit 30. The capture gas return line L12 may join the aforementioned supply gas line L4. The capture gas return line L12 may join the supply gas line L4 at a position downstream of the branch point P5 (see Fig. 2) with the discharge line L5. Since the capture gas G7 is supplied to the electrolysis unit 30, a carbon dioxide concentration in the gas supplied to the electrolysis unit 30 can be increased. This can suppress, at the cathode electrode 34, generation of hydroxide ions which is likely to occur due to a water electrolysis reaction when a carbon dioxide gas concentration is low.

The capture gas flowrate regulation valve 62 is arranged on the capture gas return line L12. The capture gas flowrate regulation valve 62 regulates a flowrate of the capture gas G7 in the capture gas return line L12. More specifically, the capture gas flowrate regulation valve 62 is configured such that its opening degree can be regulated so as to regulate a flowrate of the capture gas G7 passing through the capture gas flowrate regulation valve 62. The capture gas flowrate regulation valve 62 may be controlled by a sixth controller 64 described later, or may be manually operated without being controlled by the sixth controller 64.

A facility flowmeter 63 measures a flowrate of the capture gas G7 in the facility line L11 at a position downstream of a branch point P7 with the capture gas return line L12. The facility flowmeter 63 is arranged on the facility line L11 at a position between the branch point P7 with the capture gas return line L12 and the storage facility 5.

An opening degree of the aforementioned capture gas flowrate regulation valve 62 may be regulated based on a flowrate of the capture gas G7 measured by the facility flowmeter 63. For example, an opening degree of the capture gas flowrate regulation valve 62 is increased as a flowrate of the capture gas G7 supplied to the storage facility 5 increases. This can prevent a flowrate of the cathode gas G5 supplied to the storage facility 5 from becoming excessive.

As shown in Fig. 9, the cathode gas supply system 10 may further include the sixth controller 64. The sixth controller 64 may be integrated in the same control unit (not shown) as another controller, or may be integrated in a control unit different from another controller.

The sixth controller 64 may control the capture gas flowrate regulation valve 62 based on a flowrate of the capture gas G7 measured by the facility flowmeter 63. For example, the sixth controller 64 may regulate an opening degree of the capture gas flowrate regulation valve 62 in such a manner that a flowrate of the capture gas G7 supplied to the storage facility 5 does not become excessive. Since the sixth controller 64 controls the capture gas flowrate regulation valve 62, an opening degree of the capture gas flowrate regulation valve 62 can be appropriately and automatically regulated.

The aforementioned third modification example or the aforementioned fourth modification example may be combined with the eighth modification example of the cathode gas supply system 10 shown in Fig. 9.

In the eighth modification example, as described above, the downstream capture unit 40 is configured to be independent from the upstream capture unit 20. The example in which the upstream capture unit 20 and the downstream capture unit 40 respectively absorb the carbon dioxide gas contained in the discharge gases G1 and G3 by means of a chemical absorption method using amine solution has been described. However, the upstream capture unit 20 and the downstream capture unit 40 may be configured to absorb the carbon dioxide gas by means of any method such as another chemical absorption method such as DAC, a physical absorption method, a physical adsorption method, or a carbon dioxide membrane separation method. In addition, the upstream capture unit 20 and the downstream capture unit 40 may be configured to absorb the carbon dioxide gas by means of methods different from each other.

The aforementioned embodiment can decrease a concentration of the carbon dioxide gas contained in electrolytically produced cathode gas.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the sprit of the inventions. The accompanying claims and their equivalents are intended to cover such forms or modifications as would fail within the scope and spirit of the invention.

## Claims

1. A cathode gas supply system for supplying a processing unit with cathode gas containing the carbon monoxide gas obtained by electrolyzing carbon dioxide gas, comprising:
a carbon dioxide electrolysis unit that electrolyzes the carbon dioxide gas, and discharges cathode gas containing the carbon monoxide gas and the carbon dioxide gas; and
a downstream carbon dioxide capture unit that captures the carbon dioxide gas contained in the cathode gas, and supplies the cathode gas to the processing unit.

2. The cathode gas supply system according to claim 1, further comprising an upstream carbon dioxide capture unit that captures the carbon dioxide gas from exhaust gas containing the carbon dioxide gas, and supplies the carbon dioxide gas to the carbon dioxide electrolysis unit.

3. The cathode gas supply system according to claim 2, wherein:
the upstream carbon dioxide capture unit includes an upstream absorption tower that causes an absorption liquid to absorb the carbon dioxide gas contained in the exhaust gas, and a regeneration tower that releases the carbon dioxide gas from the absorption liquid having absorbed the carbon dioxide gas in the upstream absorption tower, and supplies the carbon dioxide gas to the carbon dioxide electrolysis unit;
the downstream carbon dioxide capture unit includes a downstream absorption tower that causes the absorption liquid to absorb the carbon dioxide gas contained in the cathode gas, and supplies the cathode gas to the processing unit; and
the absorption liquid having absorbed the carbon dioxide gas in the downstream absorption tower is supplied to the regeneration tower of the upstream carbon dioxide capture unit.

4. The cathode gas supply system according to any one of claims 1 to 3, further comprising:
a bypass line that bypasses the downstream carbon dioxide capture unit, and supplies the processing unit with some of the cathode gas discharged from the carbon dioxide electrolysis unit; and
a bypass flowrate regulation valve that regulates a flowrate of the cathode gas in the bypass line.

5. The cathode gas supply system according to claim 4, further comprising:
a second cathode line that supplies the cathode gas from the downstream carbon dioxide capture unit to the processing unit, to which second cathode line the bypass line joins; and
a downstream carbon dioxide concentration meter that measures a concentration of the carbon dioxide gas contained in the cathode gas in the second cathode line at a position downstream of a joint point with the bypass line.

6. The cathode gas supply system according to any one of claims 1 to 5, further comprising an upstream carbon dioxide concentration meter that measures a concentration of the carbon dioxide gas contained in the cathode gas discharged from the carbon dioxide electrolysis unit.

7. The cathode gas supply system according to claim 3, wherein the downstream carbon dioxide capture unit includes an absorption liquid flowrate regulation valve that regulates a flowrate of the absorption liquid supplied to the downstream absorption tower.

8. The cathode gas supply system according to claim 7, further comprising a cathode gas analyzer that measures at least one of a concentration of the carbon dioxide gas contained in the cathode gas supplied to the downstream carbon dioxide capture unit, and a flowrate of the cathode gas.

9. The cathode gas supply system according to any one of claims 1 to 8, further comprising:
a cathode gas return line that supplies the carbon dioxide electrolysis unit with some of the cathode gas discharged from the carbon dioxide electrolysis unit; and
a cathode gas flowrate regulation valve that regulates a flowrate of the cathode gas in the cathode gas return line.

10. The cathode gas supply system according to claim 9, further comprising:
a first cathode line that supplies the downstream carbon dioxide capture unit with the cathode gas discharged from the carbon dioxide electrolysis unit, from which first cathode line the cathode gas return line branches; and
a cathode gas analyzer that analyzes the cathode gas in the first cathode line at a position downstream of a branch point with the cathode gas return line.

11. The cathode gas supply system according to any one of claims 1 to 10, further comprising a supply gas flowrate regulation valve that regulates a flowrate of supply gas containing the carbon dioxide gas supplied to the carbon dioxide electrolysis unit.

12. The cathode gas supply system according to claim 11, further comprising a cathode gas analyzer that measures a concentration of the carbon dioxide gas contained in the cathode gas discharged from the carbon dioxide electrolysis unit.

13. The cathode gas supply system according to any one of claims 1 to 8, further comprising:
a facility line that supplies a storage facility with capture gas containing the carbon dioxide gas captured from the cathode gas in the downstream carbon dioxide capture unit;
a capture gas return line that branches from the facility line, and supplies the capture gas to the carbon dioxide electrolysis unit; and
a capture gas flowrate regulation valve that regulates a flowrate of the capture gas in the capture gas return line; and
a facility flowmeter that measures a flowrate of the capture gas in the facility line at a position downstream of a branch point with the capture gas return line.

14. A carbon recycling system comprising:
a cathode gas supply system according to any one of claims 1 to 13; and
a processing unit that processes the carbon monoxide gas contained in the cathode gas supplied from the cathode gas supply system.

15. The carbon recycling system according to claim 14, further comprising a carbon dioxide production unit that produces the carbon dioxide gas from anode gas containing the carbon dioxide gas discharged from the carbon dioxide electrolysis unit and oxygen gas, and tail gas containing hydrocarbon gas discharged from the processing unit,
wherein the carbon dioxide gas produced in the carbon dioxide production unit is supplied to the carbon dioxide electrolysis unit.
